# EUROPEAN PATENT SPECIFICATION

(11) **EP 4 456 059 B1**
(45) Date of publication and mention of the grant of the patent: **02.12.2026**
(21) Application number: 24168923.1
(22) Date of filing: 08.04.2024
(51) Int. Cl.: G10L 15/06, G10L 15/187, G10L 15/02

(54) **APPARATUSES, COMPUTER PROGRAM PRODUCTS, AND COMPUTER-IMPLEMENTED METHODS FOR ADAPTING SPEECH RECOGNITION BASED ON EXPECTED RESPONSE**
VORRICHTUNGEN, COMPUTERPROGRAMMPRODUKTE UND COMPUTERIMPLEMENTIERTE VERFAHREN ZUR ANPASSUNG DER SPRACHERKENNUNG AUF BASIS DER ERWARTETEN REAKTION
APPAREILS, PRODUITS-PROGRAMMES INFORMATIQUES ET PROCÉDÉS MIS EN UVRE PAR ORDINATEUR POUR ADAPTER UNE RECONNAISSANCE VOCALE SUR LA BASE D'UNE RÉPONSE ATTENDUE

(30) Priority: 27.04.2023 US 202363498784 P; 12.09.2023 US 202318465720
(43) Date of publication of application: 30.10.2024
(73) Proprietor: Honeywell International Inc., Charlotte, NC 28202 (US)
(72) Inventor: BRAHO, Keith, Charlotte, 28202 (US); MAKAY, Jason, Charlotte, 28202 (US)
(74) Representative: Haseltine Lake Kempner LLP

(56) References cited:
- EP-A1- 2 309 490
- US-A1- 2015 255 069
- US-A1- 2021 312 901

## Description

### CROSS REFERENCE TO RELATED APPLICATIONS

This application claims priority to and the benefit of U.S. Provisional Application No. 63/498,784, titled "APPARATUSES, COMPUTER PROGRAM PRODUCTS, AND COMPUTER-IMPLEMENTED METHODS FOR ADAPTING SPEECH RECOGNITION BASED ON EXPECTED RESPONSE," filed April 27, 2023.

### TECHNICAL FIELD

Embodiments of the present disclosure are generally directed to speech recognition and, specifically, to using an expected response to adapt speech recognition to user(s).

### BACKGROUND

Speech recognition has simplified many tasks in the workplace, for example, by permitting hands-free communication with a computer. However, Applicant has discovered problems with current implementations of speech recognition. Through applied effort, ingenuity, and innovation, Applicant has solved many of these identified problems by developing the embodiments of the present disclosure, which are described in detail below. Reference may be made to any of: US 2015/255069 A1, which relates to an automatic speech recognition (ASR) device to predict pronunciations of textual identifiers based on predicting one or more languages of origin of the textual identifier, wherein the ASR device receives a spoken utterance from a user requesting the ASR device to access a content item, the ASR device determines whether the spoken utterance matches one of the pronunciations of the content item in the lexicon, and the ASR device then accesses the content when the spoken utterance matches one of the potential textual identifier pronunciations; US 2021/0312901 A1, which relates to systems for automatic speech recognition and/or natural language understanding that can learn alternate pronunciations of words by finding phoneme sequences with a small edit distance to existing pronunciations; and EP 2 309 490 A1, which relates to a speech recognition system which receives and analyzes speech input from a user in order to recognize and accept a response from the use, wherein information about the response expected from the user may be available, and the available information about the expected response is used to modify the behavior of the speech recognition system by taking this information into account. For example, the modified behavior of the speech recognition system comprises adjusting the rejection threshold when speech input matches the predetermined expected response, or the modified behavior of the speech recognition system may include comparing the observed speech features to the models of the expected response separately from the usual hypothesis search in order to speed up the recognition system, modifying the usual hypothesis search to emphasize the expected response, or updating and adapting the models when the recognized speech matches the expected response to improve the accuracy of the recognition system.

### BRIEF SUMMARY

In general, embodiments of the present disclosure herein provide for adapting word pronunciations for speech recognition to a user(s) using an expected response(s). Other implementations for adapting word pronunciations will be, or will become, apparent to one with skill in the art upon examination of the following figures and detailed description.

In accordance with one aspect of the present disclosure, a computer-implemented method according to claim 1 is provided. The computer-implemented method is executable utilizing any of a myriad of computing device(s) and/or combinations of hardware, software, and/or firmware.

In some example embodiments, updating the set of phoneme sequences in the pronunciation dictionary associated with the at least one word comprises adding the phoneme sequence for the at least one word to the set of phoneme sequences.

In some example embodiments, the example computer-implemented method further comprises storing the phoneme sequence for each word in the recognition hypothesis in a data repository.

In some example embodiments, the example computer-implemented method further comprises for each word in the recognition hypothesis, updating an occurrence count for the phoneme sequence.

In some example embodiments, the set of phoneme sequences in the pronunciation dictionary associated with the at least one word is updated in response to determining that the phoneme sequence for the at least one word satisfies updating criteria.

In some example embodiments, the phoneme sequence for the at least one word satisfies the updating criteria if the phoneme sequence is one of top N occurring phoneme sequences for the word.

In some example embodiments, the phoneme sequence for the at least one word satisfies the updating criteria if an occurrence ratio for the phoneme sequence satisfies an occurrence ratio threshold.

In some example embodiments, the example computer-implemented method further comprises for each word in the recognition hypothesis, adding the phoneme sequence for the word to training data for a model configured to generate phoneme sequences; and generating using the model, a plurality of sampled phoneme sequences for the word.

In some example embodiments, the example computer-implemented method further comprises for each word in the recognition hypothesis, determining top M occurring sampled phoneme sequences of the plurality of sampled phoneme sequences; and adding the top M occurring sampled phoneme sequences to the pronunciation dictionary.

In some example embodiments, the example computer-implemented method further comprises for each word in the recognition hypothesis, determining one or more of (i) if an occurrence count associated with a sampled phoneme sequence satisfies an occurrence count threshold, or (iii) if an occurrence ratio for the sampled phoneme sequence satisfies an occurrence ratio threshold.

In accordance with another aspect of the present disclosure, an apparatus for adapting speech recognition pronunciation is provided. The apparatus includes at least one processor and at least one non-transitory memory, the at least one non-transitory memory having computer-coded instructions stored thereon. The computer-coded instructions in execution with the at least one processor causes the apparatus to perform any of the example computer-implemented methods described herein. In some other embodiments, the apparatus includes means for performing each step of any of the computer-implemented methods described herein.

In accordance with another aspect of the present disclosure, a computer program product for adapting speech recognition pronunciation is provided. The computer program product includes at least one non-transitory computer-readable storage medium having computer program code stored thereon. The computer program code in execution with at least one processor is configured for performing any one or the example computer-implemented methods described herein.

### BRIEF DESCRIPTION OF THE SEVERAL VIEWS OF THE DRAWINGS

Having thus described the embodiments of the disclosure in general terms, reference now will be made to the accompanying drawings, which are not necessarily drawn to scale, and wherein:
FIG. 1 illustrates a block diagram of a system that may be specially configured within which embodiments of the present disclosure may operate;
FIG. 2 illustrates a block diagram of an example apparatus embodying a speech recognition system in accordance with at least one embodiment of the present disclosure;
FIG. 3 illustrates an example apparatus embodying a client computing system in accordance with at least one embodiment of the present disclosure;
FIG. 4 illustrates a visualization of an example data environment for adapting word pronunciations in a speech recognition system to a user(s) in accordance with at least one embodiment of the present disclosure;
FIG. 5 illustrates a flow chart depicting example operations of an example process for adapting word pronunciations in a speech recognition system to a user(s), in accordance with at least one embodiment of the present disclosure; and
FIG. 6 illustrates a flow chart depicting example operations of an example process for updating a set of phoneme sequences associated with a particular word of an expected response, in accordance with at least one embodiment of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout. The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

### OVERVIEW AND TECHNICAL IMPROVEMENTS

Speech recognition has simplified many tasks in the workplace, for example, by permitting hands-free communication with a computer. A worker may enter data by voice using a speech recognizer and commands or instructions may be communicated to the worker by a speech synthesizer. Speech recognition finds particular application in mobile computing devices in which interaction with the computer by conventional peripheral input/output devices is restricted.

For example, wireless wearable terminals can provide a worker performing work-related tasks with desirable computing and data-processing functions while offering the worker enhanced mobility within the workplace. One particular area in which workers rely heavily on such wireless wearable terminals is inventory management. Inventory-driven industries rely on computerized inventory management systems for performing various diverse tasks, such as food and retail product distribution, manufacturing, and quality control. An overall integrated management system involves a combination of a central computer system for tracking and management, and the people who use and interface with the computer system in the form of order fillers, pickers and other workers. The workers handle the manual aspects of the integrated management system under the command and control of information transmitted from the central computer system to the wireless wearable terminal.

For example, as the workers complete their assigned tasks, a bi-directional communication stream of information is exchanged over a wireless network between wireless wearable terminals and the central computer system. Information received by each wireless wearable terminal from the central computer system is translated into voice instructions or text commands for the corresponding worker. Typically, the worker wears a headset coupled with the wearable device that has a microphone for voice data entry and an ear speaker for audio output feedback. Responses from the worker are input into the wireless wearable terminal by the headset microphone and communicated from the wireless wearable terminal to the central computer system. Through the headset microphone, workers may pose questions, report the progress in accomplishing their assigned tasks, and report working conditions, such as inventory shortages. Using such wireless wearable terminals, workers may perform assigned tasks virtually hands-free without equipment to juggle or paperwork to carry around. Because manual data entry is eliminated or, at the least, reduced, workers can perform their tasks faster, more accurately, and more productively.

An illustrative example of a set of worker tasks suitable for a wireless wearable terminal with voice capabilities may involve initially welcoming the worker to the computerized inventory management system and defining a particular task or order, for example, filling a load for a particular truck scheduled to depart from a warehouse. The worker may then answer with a particular area (e.g., freezer) that they will be working in for that order. The system then vocally directs the worker to a particular aisle and bin to pick a particular quantity of an item. The worker then vocally confirms a location and the number of picked items. The system may then direct the worker to a loading dock or bay for a particular truck to receive the order. As may be appreciated, the specific communications exchanged between the wireless wearable terminal and the central computer system can be task-specific and highly variable.

During the interchange between the worker and the system, there may be instances where the system expects a specific response from the worker (e.g., when the worker is confirming his or her location). It is desirable to use an expected response to improve accuracy and efficiency of the speech recognition system. While existing speech recognition systems generally address the task of determining the spoken input and recognizing the speech, there are still some drawbacks in such systems. For example, existing speaker-independent speech recognition suffer from a myriad of deficiencies and do not work well for all users. Many words have multiple pronunciation that are acceptable, which many existing speech recognition systems fail to effectively account for, and thus making it challenging for conventional systems to adapt pronunciations in a speech recognition system without compounding recognition errors. One challenge of adapting pronunciations in a speech recognition system is that if a speech recognition error occurs, adapting the pronunciation to the speech may cause the pronunciation of the word to "adapt away" from the correct pronunciation, which in turn can lead to more recognition errors.

Embodiments of the present disclosure provide for using expected responses to adapt speech recognition pronunciations to a user(s). Embodiments of the present disclosure include decoding input speech to generate a recognition hypothesis that includes a sequence of one or more words. Embodiments compare the recognition hypothesis to a set of one or more expected responses to determine if the recognition hypothesis matches the expected response and accept the recognition hypothesis if it is determined that the recognition hypothesis matches an expected response but may have otherwise been rejected. Accordingly, by comparing a recognition hypothesis to an expected response known to the speech recognition system, some embodiments of the present disclosure provide an additional layer for ensuring the accuracy of speech recognition systems, which in turn obviates the need for a user to repeat an utterance for speech recognition processing by the speech recognition system. By obviating the need for a user to repeat or confirm an utterance for speech recognition processing, embodiments of the present disclosure improve worker (e.g., user) productivity and computing efficiency, and reduce network traffic.

Some embodiments further generate a phoneme sequence for each word of a recognition hypothesis that is determined to match an expected response and store the phoneme sequences as candidate phoneme sequences (e.g., observed phone sequences) for updating a set of pronunciations leveraged by the speech recognition system in recognizing speech. Some embodiments evaluate these candidate phoneme sequences (e.g., candidate alternative pronunciations), and update the set of phoneme sequences for the word in a phoneme pronunciation dictionary with the candidate phoneme sequences to adapt the pronunciation. Accordingly, by updating phoneme sequences utilized by a speech recognition system based on expected responses, embodiments, of the present disclosure improve the accuracy of speech recognition systems, obviating the need for a user to repeat an utterance for speech recognition processing by the speech recognition system, which in turn improves worker productivity and computing efficiency, and reduces network traffic.

### DEFINITIONS

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "recognition hypothesis" may refer to an output of a decoder associated with a speech recognition system. In some embodiments, a recognition hypothesis may comprise a sequence of one or more words.

The term "expected response" may refer to a sequence of one or more words that a user is expected to utter. An expected response may be used to determine whether to adapt a pronunciation for a user(s). In some embodiments, an expected response is utilized in determining whether to accept a recognition hypothesis.

The term "phoneme" refers to a unit of sound utilized in a language. In some examples, a phoneme is a unit of sound utilized in a language to distinguish one word from another. As used herein, a phoneme may represent any sub-word building block unit of sound. For instance, a phoneme may be a portion of a traditional phoneme such as senone or multiple traditional phonemes, such as a syllable.

The term "phoneme sequence" refers to a sequence of one or more phonemes. For example, a phoneme sequence comprises the sounds of speech in one or more words that follow each other. A phoneme sequence may define a pronunciation for a word.

The term "pronunciation dictionary" may refer to a data structure that defines the pronunciation(s) for a set of words, where, in some examples, the set of words may represent words known to a speech recognition system. In some embodiments, a pronunciation dictionary may comprise a grapheme-to-phoneme (g2p)/text to phoneme (TTP) module/model. For example, the term "pronunciation dictionary" may refer to a software, hardware, firmware, and/or a process that produces a pronunciation (e.g., phoneme sequence) when presented with a word. In some embodiments, the term "pronunciation dictionary" may refer to a combination of these data structure and process as described herein. In some embodiments, the pronunciation dictionary may include one or more pronunciations for a given word in the pronunciation dictionary. A pronunciation may be associated with a phoneme sequence. For example, each pronunciation for a word may be defined by a phoneme sequence (e.g., sequence of one or more phonemes). In some embodiments, a pronunciation dictionary may be leveraged by a speech recognition system to perform various speech recognition functionalities associated with the speech recognition system. In some embodiments, a given pronunciation may be associated with a probability value based on the number of occurrences of the particular pronunciation.

The term "updating criteria" refers to one or more criteria that are leveraged to determine if a phoneme sequence should be added to a phoneme pronunciation dictionary.

The term "language model," "grammar," and similar terms used herein interchangeably may refer to a data entity that captures the allowable sequences of words of the language. In some examples, a language model may be defined by grammar rules of the language. In some embodiments, a language model may be defined by word-sequence constraints (e.g., probability of a word following another word). For example, a decoder of a speech recognition system may determine the probability of the next word it is hypothesizing based on the previous word(s) already hypothesized.

The term "occurrence count" refers to a data entity that describes the number of times an item is associated with an event. For example, an occurrence count for a phoneme sequence may refer to the number of times the phoneme sequence has been recognized as corresponding to an input speech that was successfully recognized by a speech recognition system.

The term "qualifying recognition hypothesis" refers to a recognition hypothesis that is determined to match an expected response.

The term "sampled phoneme sequence" refers to a phoneme sequence that is outputted from a model that is configured, trained, and/or the like to generate phoneme sequences. A nonlimiting example of such model is a Markov Chain model.

### EXAMPLE SYSTEMS AND APPARATUSES OF THE DISCLOSURE

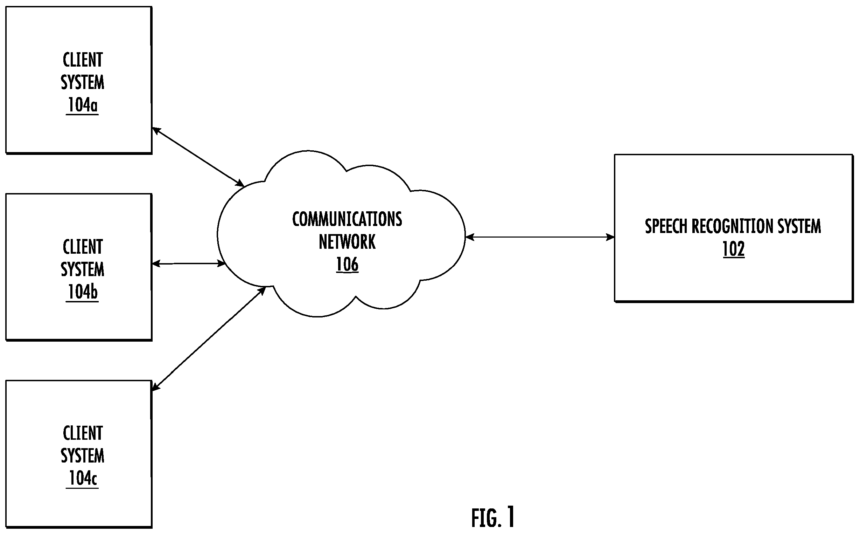

FIG. 1 illustrates a block diagram of a system that may be specially configured within which embodiments of the present disclosure may operate. Specifically, FIG. 1 depicts an example system 100. As illustrated, the system 100 includes a speech recognition system 102 and one or more client systems (e.g., client system 104a, client system 104b, and client system 104c). In some embodiments, the speech recognition system 102 and the client system 104a-104c communicate over one or more communication network(s), for example a communications network 106.

It should be appreciated that the communications network 106 in some embodiments is embodied in any of a myriad of network configurations. In some embodiments, the communications network 106 embodies a public network (e.g., the Internet). In some embodiments, the communications network 106 embodies a private network (e.g., an internal localized, or closed-off network between particular devices). In some other embodiments, the communications network 106 embodies a hybrid network (e.g., a network enabling internal communications between particular connected devices and external communications with other devices). The communications network 106 in some embodiments includes one or more base station(s), relay(s), router(s), switch(es), cell tower(s), communications cable(s) and/or associated routing station(s), and/or the like. In some embodiments, the communications network 106 includes one or more user controlled computing device(s) (e.g., a user owned router and/or modem) and/or one or more external utility devices (e.g., Internet service provider communication tower(s) and/or other device(s)).

Each of the components of the system 100 are communicatively coupled to transmit data to and/or receive data from one another over the same or different wireless and/or wired networks embodying the communications network 106. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1 illustrate certain system entities as separate, standalone entities communicating over the communications network 106, the various embodiments are not limited to this architecture. In other embodiments, one or more computing entities share one or more components, hardware, and/or the like, or otherwise are embodied by a single computing device such that connection(s) between the computing entities are over the communications network 106 are altered and/or rendered unnecessary.

In some embodiments, the client system(s) is embodied in an on-premises system. In one embodiment, the client system(s) is/are embodied in an on-premises system within or associated with a particular industrial system, for example including any number of third-party device(s), sensor(s), and/or the like. Additionally or alternatively, in some embodiments, a client system 104a-104c and the speech recognition system 102, are embodied as on-premises systems associated with a particular system associated with a warehouse, an industrial plant, etc. In some embodiments, the on-premises systems are communicatively coupled via at least one wired device. Additionally or alternatively, one or more of such systems may be remote from one another, for example where the client system represents an on-premises system corresponding to, for example, a particular industrial system, and where the speech recognition system 102 is a cloud system or otherwise remotely located from the client system.

A client system, for example one or more of the client systems 104a-104c, includes any number of computing device(s), system(s), physical component(s), and/or the like, that facilitates generation and/or use of a speech signal. In some embodiments, a client system may be configured to capture an utterance (e.g., speech signal) from a user. In some embodiments, a client system includes one or more end user terminal(s), server(s), and/or the like that are configured to perform such functions. In some embodiments, a client system 104a-104c may be embodied by an input speech device configured to capture a speech signal from a user.

The speech recognition system 102 includes one or more computing device(s), system(s), and/or the like embodied in hardware, software, firmware, and/or a combination thereof, that performs speech recognition based on a speech signal. Additionally or alternatively, in some embodiments, the speech recognition system 102 includes one or more computing device(s), system(s), and/or the like embodied in hardware, software, firmware, and/or a combination thereof, that performs generation and/or maintenance of a pronunciation dictionary. In some embodiments, the speech recognition system 102 includes one or more specially configured application server(s), database server(s), end user device(s), cloud computing system(s), and/or the like. Additionally or alternatively, in some embodiments, the speech recognition system 102 includes one or more user device(s) that enables access to functionality provided by the speech recognition system 102, for example via a web application, native application, and/or the like. Alternatively or additionally still, in some embodiments, a client system is specially configured to provide access to the functionality of the client system(s).

In some embodiments, the speech recognition system 102 in conjunction with a client system(s), is configured to facilitate speech recognition and/or adapting word pronunciations of a speech recognition system to a user(s). In some embodiments, the speech recognition system 102 is configured to facilitate generation, storage, and/or maintenance of a recognition hypothesis for an input speech. In some embodiments, the speech recognition system 102 is configured to update (e.g., modify) a pronunciation dictionary associated with generation of speech recognition. In some embodiments, each client system is associated with a particular possibly authenticated account (e.g., a user account identifying a particular user or a particular enterprise account identifying a particular entity). In some embodiments, a pronunciation dictionary refers to a data structure that defines the pronunciation(s) for a set of words. A pronunciation dictionary may comprise a grapheme-to-phoneme (g2p)/text to phoneme (TTP) module/model in some embodiments. For example, a pronunciation dictionary may refer to a software, hardware, firmware, and/or a process that produces a pronunciation (e.g., phoneme sequence) when presented with a word. In some embodiments, the pronunciation dictionary may include one or more pronunciations for a given word in the pronunciation dictionary. For example, each pronunciation for a word may be defined by a phoneme sequence (e.g., a sequence of one or more phonemes). In some embodiments, a phoneme refers to a unit of sound utilized in a language. For example, a phoneme may comprise a unit of sound utilized in a particular language to distinguish one word from another in the particular language. As used herein, a phoneme may represent any sub-word building block unit of sound. For instance, a phoneme may be a portion of a traditional phoneme such as senone or multiple traditional phonemes, such as a syllable. In some embodiments, an expected response comprises a sequence of one or more words.

In some embodiments, the speech recognition system 102 and the client system 104a-104c communicate with one another to perform the various actions described herein. For example, in some embodiments, the speech recognition system 102 and one or more of the client systems 104a-104c communicate to generate and store a recognition hypothesis. In some embodiments, the speech recognition system 102 and one or more of the client systems 104a-104c communicate to display, configure, and/or update pronunciations (e.g., set of phoneme sequences).

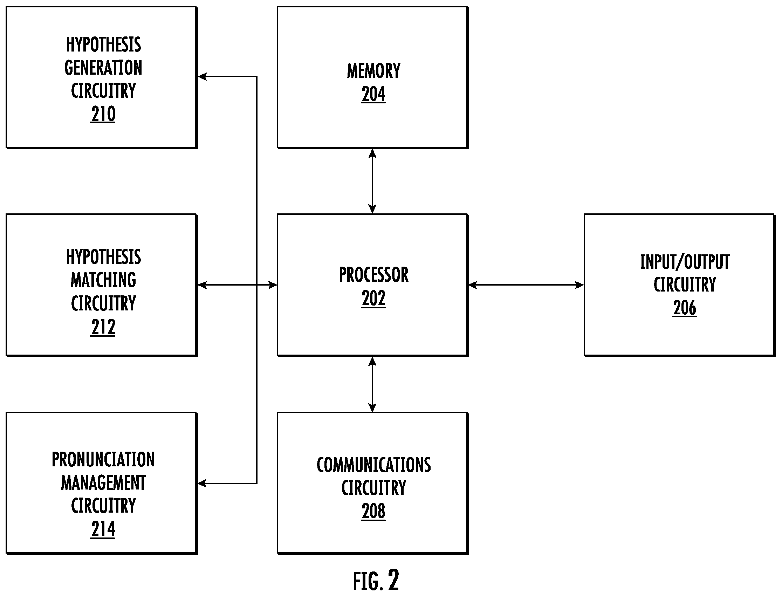

FIG. 2 illustrates a block diagram of an example apparatus that may be specially configured in accordance with at least one example embodiment of the present disclosure. Specifically, FIG. 2 depicts an example speech recognition apparatus ("apparatus 200") specially configured in accordance with at least some example embodiments of the present disclosure. In some embodiments, the speech recognition system 102 and/or a portion thereof is embodied by one or more system(s), such as the apparatus 200 as depicted and described in FIG. 2. The apparatus 200 includes processor 202, memory 204, input/output circuitry 206, communications circuitry 208, hypothesis generation circuitry 210, hypothesis matching circuitry 212, and/or pronunciation management circuitry 214. In some embodiments, the apparatus 200 is configured, using one or more of the sets of circuitry embodied by processor 202, memory 204, input/output circuitry 206, communications circuitry 208, hypothesis generation circuitry 210, hypothesis matching circuitry 212, and/or pronunciation management circuitry 214, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the apparatus 200 embodies a particular specially-configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

**In** some embodiments, the processor 202 (and/or co-processor or any other processing circuitry assisting or otherwise associated with the processor) is/are in communication with the memory 204 via a bus for passing information among components of the apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 202 is configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with performing speech recognition and adapting speech recognition pronunciations to a user(s). In some such embodiments, the processor 202 includes hardware, software, firmware, and/or a combination thereof that generates a recognition hypothesis for an input speech. Additionally or alternatively, in some embodiments, the processor 202 includes hardware, software, firmware, and/or a combination thereof that matches a recognition hypothesis to one or more expected responses to determine if the recognition hypothesis matches at least one of the expected responses. Additionally or alternatively, in some embodiments, the processor 202 includes hardware software, firmware, and/or a combination thereof that generates a phoneme sequence for an input speech. Additionally or alternatively, in some embodiments, the processor 202 includes hardware software, firmware, and/or a combination thereof that keeps track of the number of times each pronunciation (e.g., corresponding phoneme sequence) was recognized. Additionally or alternatively, the processor 202 includes hardware software, firmware, and/or a combination thereof that determines if a phoneme sequence satisfies an updating criteria, where the updating criteria may include one or more of whether an occurrence count associated with the phoneme sequence satisfies an occurrence count threshold, whether the phoneme sequence is one of top N occurring phoneme sequences for the word, and/or whether an occurrence ratio for the phoneme sequence satisfies an occurrence ratio threshold. Additionally or alternatively, in some embodiments, the processor 202 includes hardware software, firmware, and/or a combination thereof that updates a pronunciation dictionary leveraged for speech recognition (e.g., utilized in generating a recognition hypothesis). Additionally or alternatively, in some embodiments, the processor 202 includes hardware software, firmware, and/or a combination thereof that collect(s) and/or maintains various data associated with performing speech recognition and/or adapting word pronunciation of speech recognition to a user(s).

In some embodiments, the apparatus 200 includes communications circuitry 208. The communications circuitry 208 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 208 includes, for example, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). In some embodiments, the communications circuitry 208 enables transmission to and/or receipt of data from user device, one or more asset(s) or accompanying sensor(s), and/or other external computing device in communication with the apparatus 200.

In some embodiments, the apparatus 200 includes hypothesis generation circuitry 210. The hypothesis generation circuitry 210 includes hardware, software, firmware, and/or a combination thereof, that supports generation and use of a recognition hypothesis for an input speech. For example, in some embodiments, the hypothesis generation circuitry 210 includes hardware, software, firmware, and/or a combination thereof, that receives input speech from, for example, a client system. Additionally or alternatively, in some embodiments, the hypothesis generation circuitry 210 includes hardware, software, firmware, and/or a combination thereof, that processes the input speech to extract one or more features of the input speech. In some embodiments, the hypothesis generation circuitry 210 includes hardware, software, firmware, and/or a combination thereof, that analyzes features associated with an input speech to generate a recognition hypothesis for an input speech. In some embodiments, the hypothesis generation circuitry 210 includes hardware, software, firmware, and/or a combination thereof, that analyzes features associated with an input speech to generate a phoneme sequence for an input speech. Additionally or alternatively, in some embodiments, the hypothesis generation circuitry 210 includes hardware, software, firmware, and/or a combination thereof, that maintains at least one data repository comprising any number of generated recognition hypotheses. In some embodiments, hypothesis generation circuitry 210 includes a separate processor, specially configured field programmable gate array (FPGA), or a specially programmed application specific integrated circuit (ASIC).

In some embodiments, the apparatus 200 includes hypothesis matching circuitry 212. The hypothesis matching circuitry 212 includes hardware, software, firmware, and/or a combination thereof, that supports determining if a recognition hypothesis matches at least one expected response of one or more expected responses. For example, in some embodiments, the hypothesis matching circuitry 212 includes hardware, software, firmware, and/or a combination thereof, that maintains at least one data repository comprising any number of expected responses. Additionally or alternatively, in some embodiments, the hypothesis matching circuitry 212 includes hardware, software, firmware, and/or a combination thereof, that receives a recognition hypothesis, for example from the hypothesis generation circuitry 210. Additionally or alternatively, in some embodiments, the hypothesis matching circuitry 212 includes hardware, software, firmware, and/or a combination thereof, that retrieves a recognition hypothesis from a data repository, such as a data repository maintained by the hypothesis generation circuitry 210. Additionally or alternatively, in some embodiments, the hypothesis matching circuitry 212 includes hardware, software, firmware, and/or a combination thereof, that determines if a recognition hypothesis matches at least one expected response of one or more expected responses. Additionally or alternatively, in some embodiments, the hypothesis matching circuitry 212 includes hardware, software, firmware, and/or a combination thereof, that stores pronunciation(s) (e.g., set of phoneme sequences) associated with each recognition hypothesis that is determined to match an expected response. In some embodiments, a recognition hypothesis that is determined to match an expected response is deemed a qualifying recognition hypothesis and may be adopted as the recognized speech.

In some embodiments, the apparatus 200 includes pronunciation management circuitry 214. The pronunciation management circuitry 214 includes hardware, software, firmware, and/or a combination thereof, that supports updating of a pronunciation dictionary associated with speech recognition of an input speech to adapt word pronunciations in a speech recognition system to a user(s). For example, in some embodiments, the pronunciation management circuitry 214 includes hardware, software, firmware, and/or a combination thereof, that tracks the number of times a pronunciation (e.g., a phoneme sequence) was recognized. For example, in some embodiments, the hypothesis matching circuitry 212 includes hardware, software, firmware, and/or a combination thereof, that monitors (e.g., continuously, occasionally, or periodically) a data repository storing pronunciations (e.g., sets of phoneme sequences) associated with each qualifying recognition hypothesis, and keeps a count of each unique pronunciation in the data repository storing pronunciations associated with qualifying recognition hypotheses. Additionally or alternatively, in some embodiments, the pronunciation management circuitry 214 includes hardware, software, firmware, and/or a combination thereof, that determines whether to add a pronunciation (e.g., phoneme sequence) for a word to a pronunciation dictionary based one or more updating criteria. In some embodiments, the one or more updating criteria includes one or more of whether an occurrence count for the pronunciation (e.g., phoneme sequence) satisfies an occurrence count threshold, whether a pronunciation (e.g., phoneme sequence) is one of the top N (e.g., N = 2, 5, 10, 20, etc.) occurring pronunciations for the word, and/or whether an occurrence ratio for the pronunciation (e.g., phoneme sequence) satisfies an occurrence ratio threshold. In some embodiments, an occurrence ratio describes a ratio of the occurrence count for a pronunciation for a word relative to the most occurring pronunciation (e.g., pronunciation associated with N=1) for the word. In one particular embodiment, if a given pronunciation of one or more pronunciations for a word is one of the top N pronunciations recognized for the word, if the occurrence count for the pronunciation satisfies the occurrence count threshold, and if the occurrence ratio (e.g., ratio of the occurrence count for the pronunciation relative to the most frequently occurring pronunciation) satisfies the occurrence ratio threshold, the pronunciation dictionary is updated. In some embodiments, the pronunciation dictionary is updated by adding the pronunciation (e.g., phoneme sequence) to a set of pronunciations (e.g., set of phoneme sequences) associated with the word. For example, the set of pronunciations (e.g., set of phoneme sequences) in the pronunciation dictionary that is associated with the word is updated. It would be appreciated that the updating criteria are not limited to the above examples and may comprise any suitable updating criteria.

Additionally or alternatively, in some embodiments, the pronunciation management circuitry 214 includes hardware, software, firmware, and/or a combination thereof, that aggregates the occurrence count for each pronunciation (e.g., phoneme sequence) associated with a word. Additionally or alternatively, in some embodiments, the pronunciation management circuitry 214 includes hardware, software, firmware, and/or a combination thereof, that determines whether the aggregate of the occurrence counts for each pronunciation associated with a word satisfies an aggregate threshold. Additionally or alternatively, in some embodiments, the pronunciation management circuitry 214 includes hardware, software, firmware, and/or a combination thereof, that in response to an aggregate of the occurrence counts for pronunciations associated with a given word satisfying an aggregate threshold, reduces the occurrence count for all recognized pronunciations of the word by a configurable percentage. In some embodiments, pronunciation management circuitry 214 includes a separate processor, specially configured field programmable gate array (FPGA), or a specially programmed application specific integrated circuit (ASIC).

Additionally or alternatively, in some embodiments, two or more of the sets of circuitries embodying processor 202, memory 204, input/output circuitry 206, communications circuitry 208, hypothesis generation circuitry 210, hypothesis matching circuitry 212, and/or pronunciation management circuitry 214 are combinable. Alternatively or additionally, in some embodiments, one or more of the sets of circuitry perform some or all of the functionality described associated with another component. For example, in some embodiments, two or more of the sets of circuitry embodied by processor 202, memory 204, input/output circuitry 206, communications circuitry 208, hypothesis generation circuitry 210, hypothesis matching circuitry 212, and/or pronunciation management circuitry 214 are combined into a single module embodied in hardware, software, firmware, and/or a combination thereof. Similarly, in some embodiments, one or more of the sets of circuitry, for example hypothesis generation circuitry 210, hypothesis matching circuitry 212, pronunciation management circuitry 214, is/are combined with the processor 202, such that the processor 202 performs one or more of the operations described above with respect to each of these sets of circuitry embodied by the hypothesis generation circuitry 210, hypothesis matching circuitry 212, and/or pronunciation management circuitry 214.

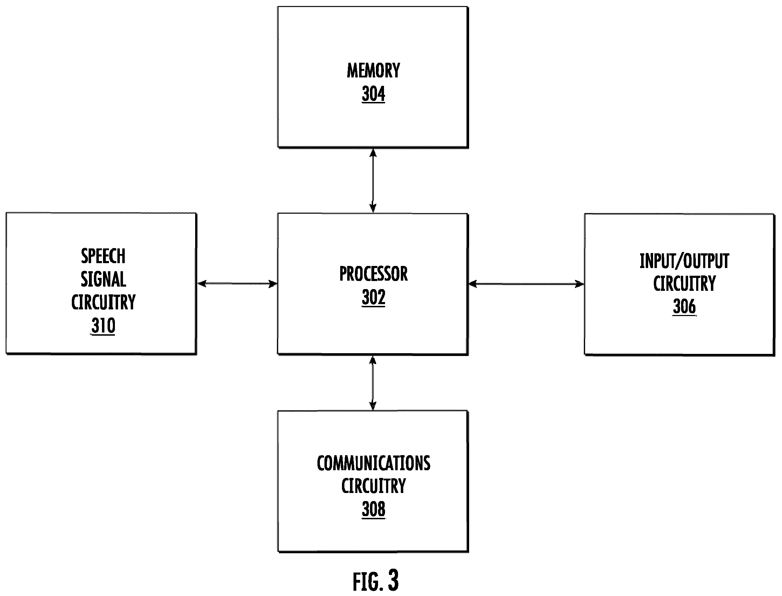

FIG. 3 illustrates a block diagram of an example apparatus embodying a client system in accordance with at least one embodiment of the present disclosure. Specifically, FIG. 3 illustrates an example client apparatus 300 ("apparatus 300") specifically configured in accordance with at least one example embodiment of the present disclosure. In some embodiments each of the client systems 104a-104c is/are embodied by one or more system(s), device(s), and/or the like, such as the apparatus 300 as depicted and described in FIG. 3. The apparatus 300 includes processor 302, memory 304, input/output circuitry 306, communications circuitry 308, and speech signal circuitry 310. In some embodiments, the apparatus 300 is configured, using one or more of the processor 302, memory 304, input/output circuitry 306, communications circuitry 308, and speech signal circuitry 310, to execute and perform one or more of the operations described herein.

In some embodiments, the processor 302, memory 304, input/output circuitry 306, and communications circuitry 308, function similarly or identically to the similarly named sets of circuitry embodying processor 202, memory 204, input/output circuitry 206, and communications circuitry 208 as depicted and described with respect to the apparatus 200 in FIG. 2. Additionally or alternatively, in some embodiments, the processor 302 includes hardware, software, firmware, and/or a combination thereof, that supports functionality performed by the client systems as depicted and described with respect to FIG. 1. For example, in some embodiments, the processor 302 includes hardware, software, firmware, and/or a combination thereof, that supports various functionality associated with capturing a speech signal, for example, an utterance by a user. For purposes of brevity, repeated disclosure with respect to the functionality of such similarly-named sets of circuitry is omitted herein. In some embodiments, speech signal circuitry 310 includes a separate processor, specially configured field programmable gate array (FPGA), or a specially programmed application specific integrated circuit (ASIC).

Additionally or alternatively, in some embodiments, two or more of the sets of circuitries embodying processor 302, memory 304, input/output circuitry 306, communications circuitry 308, and/or speech signal circuitry 310 are combinable. Alternatively or additionally, in some embodiments, one or more of the sets of circuitry perform some or all of the functionality described associated with another component. For example, in some embodiments, two or more of the sets of circuitry embodied by processor 302, memory 304, input/output circuitry 306, communications circuitry 308, and/or speech signal circuitry 310, are combined into a single module embodied in hardware, software, firmware, and/or a combination thereof. Similarly, in some embodiments, one or more of the sets of circuitry, for example speech signal circuitry 310 is/are combined with the processor 302, such that the processor 302 performs one or more of the operations described above with respect to each of these sets of circuitry embodied by the speech signal circuitry 310.

### EXAMPLE DATA ENVIRONMENTS AND ARCHITECTURES OF THE DISCLOSURE

Having described example systems and apparatuses of the disclosure, example data architectures, data environments, and data flows will now be described. In some embodiments, the data architectures represent data object(s) maintained and processed in particular computing environments. In some embodiments, the computing environment(s) is/are maintained via hardware, software, firmware, and/or a combination thereof, that execute one or more software application(s) that manage such data. For example, in some embodiments, the apparatus 200 and/or apparatus 300 execute one or more software application(s) that maintain the data architecture(s) as depicted and described to, alone or in conjunction with one another, perform the functionality as depicted and described with respect to adapting word pronunciations in a speech recognition system to a user(s).

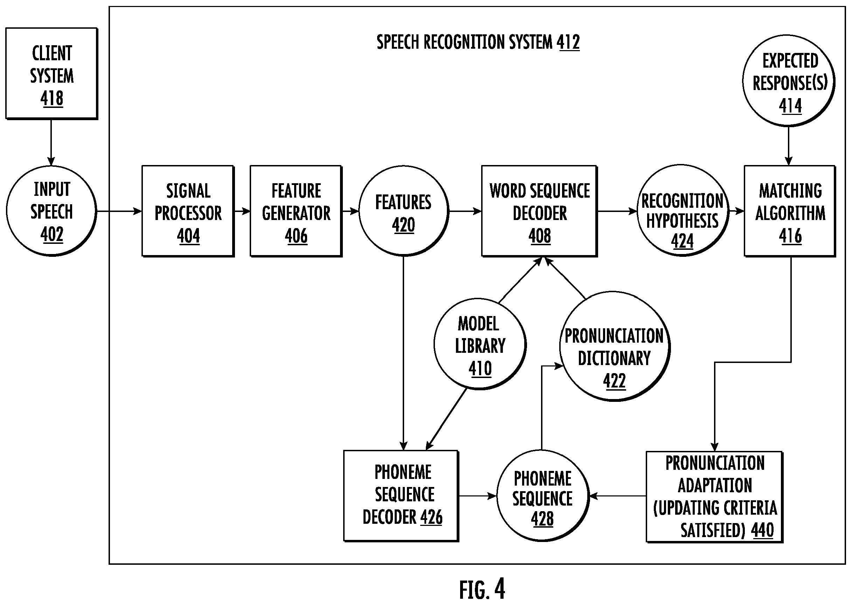

FIG. 4 illustrates a visualization of an example data environment for adapting word pronunciations of speech recognition to a user(s) in accordance with at least one embodiment of the present disclosure. Specifically, the data environment for generating the pronunciation is performed by a speech recognition system 412. The speech recognition system 412 may embody a particular implementation of the speech recognition system 102 as depicted and described herein. For example, in some embodiments, the speech recognition system 412 is embodied by the apparatus 200 as depicted and described herein. In some embodiments, the speech recognition system 412 causes rendering of, or otherwise provides access to, one or more user interfaces specially configured to enable inputting of data.

As illustrated, the speech recognition system 412 receives an input speech 402, such as from a client system 418. The client system 418 may embody a particular implementation of a client system 104a, client system 104b, or client system 104c as depicted and described herein. In some embodiments, the input speech 402 may be captured by the client system 104a in a variety of ways. For example, a microphone or other electro-acoustical device senses speech from a user and converts it into an analog voltage signal that is then transmitted to a signal processor 404. In some embodiments, the signal processor 404 includes analog-to-digital converter(s), filter(s), equalization circuitry, and/or other components that convert the analog speech signal into a digitized stream of data that can be separated into separate units for analysis such as, for example, frames. Additionally or alternatively, in some embodiments, input speech from client system 418 can be retrieved from a data storage device. In some embodiments, the speech recognition system 412 leverages one or more components thereof (e.g., signal processor 404, feature generator 406, word sequence decoder 408, phoneme sequence decoder 426, and/or the like) to perform various functionalities associated with the speech recognition system 412.

In some embodiments, the speech recognition system 412 leverages a signal processor 404 to divide the digital stream of data that is created into a sequence of frames, each of which is then processed by a feature generator 406 to generate features 420 of the frames. In some embodiments, the generated features 420 comprise acoustic features of the frames. In some embodiments, the features 420 are represented in the form of a vector, matrix, or otherwise organized set of numbers. The feature generator 406 may utilize one or more of a variety of techniques to represent speech. As one example, the feature generator 406 may utilize Linear Predictive Coding (LPC) coefficients to represent speech. As another example, the feature generator 406 may utilize mel-frequency cepstral coefficients to represent speech. Additionally or alternatively, in some embodiments, the generated features 420 comprise phonemes.

In some embodiments, the speech recognition system 412 leverages a word sequence decoder 408, to generate a recognition hypothesis 424 based on the features 420. For example, in some embodiments, the word sequence decoder 408 is configured to analyze the features 420 to generate a recognition hypothesis 424. In some embodiments, a recognition hypothesis comprises a word sequence (e.g., sequence of one or more words) that is hypothesized by the speech recognition system as the word(s) uttered by a user. In some embodiments, the speech recognition system 412 utilizes a search algorithm to generate the recognition hypothesis 424. In some embodiments, the word sequence decoder 408 (e.g., the search algorithm thereof) leverages a pronunciation dictionary 422 to generate a recognition hypothesis 424. In some embodiments, the word sequence decoder 408 may additionally leverage one or more models (e.g., speech models) from the model library 410 to generate the recognition hypothesis 424. In some embodiments the model library 410 includes acoustic models and/or language models. For example, in some embodiments, the word sequence decoder 408 (e.g., the search algorithm thereof) utilizes one or more of the pronunciation dictionary, acoustic models and/or language models in generating a recognition hypothesis for an input speech. In some embodiments, one or more of the model(s) (e.g., acoustic model, language model, and/or the like) leveraged by the word sequence decoder 408 to generate a recognition hypothesis 424 may comprise a probabilistic model. In some embodiments, pronunciations and/or one or more models in the model library 410 may be customized to a user(s) via templates, custom pronunciations, or other means, while one or more models or pronunciations may be generic to all users. In some embodiments, a pronunciation dictionary 422 may include one or more pronunciations for each word of a plurality of words. In some embodiments, the plurality of words may comprise all words (or a subset thereof) in a grammar. In some embodiments, the plurality of words may comprise words associated with expected responses.

In some embodiments, to generate a recognition hypothesis 424, the word sequence decoder 408 (e.g., using a search algorithm) compares the features 420 generated by the feature generator 406 with reference representations of speech, or speech models, in the pronunciation dictionary 422 and/or model library 410 in order to determine the word or words that best match the input speech 402. For example, in some embodiments, the pronunciation dictionary, and/or one or more models in the model library 410 is searched to determine word or words that best match the input speech 402. In one particular embodiment, to determine the word or words that best match the input speech 402, a confidence factor is assigned to a hypothesis to indicate how closely the features from the feature generator 406 match the closest pronunciation and/or best-matching models in model library 410. In some embodiments, a hypothesis consisting of one or more vocabulary items (e.g., sequence of one or more words) and associated confidence factor(s) is directed to an acceptance algorithm. If the confidence factor satisfies (e.g., is above) a defined acceptance threshold, then the recognized speech (e.g., hypothesis) is accepted as a recognition hypothesis. In some embodiments, if the confidence factor does not satisfy (e.g., is not above) the acceptance threshold, the acceptance algorithm ignores or rejects the recognized speech or prompts the user to repeat the speech. In this instance, the user may repeat the speech to client system 418.

In some embodiments, Hidden Markov Model (HMM) technique is utilized for speech recognition. In speech recognition, HMM models use sequences of states to describe vocabulary items, which may be words, phrases, or subword units. As used herein, the term "word" is used to denote a vocabulary item, and thus may mean a word, a segment or part of a word, or a compound word, such as "next slot" or "say again." Therefore, the term "word" is not limited to just a single word. Each state in an HMM may represent one or more acoustic events and serve to assign a probability to each observed feature vector. Accordingly, a path through the HMM states may produce a probabilistic indication of a series of acoustic feature vectors. The model is searched such that different, competing hypotheses (or paths) are scored; a process known as acoustic matching or acoustic searching. A state S can be reached at a time T via a number of different paths. For each path reaching a particular state at a particular time, a path probability is calculated. Using the Viterbi algorithm, each path through the HMM can be assigned a probability. In particular, the best path can be assigned a probability. Furthermore, each word in the best path can be assigned a probability. Each of these probabilities can be used to derive a confidence factor or combined with other measurements, estimates or numbers to derive a confidence factor. The path with the highest confidence factor, the best hypothesis, can then be further analyzed. Other paths, including those that are not the best hypothesis can also be analyzed as described herein. The other paths are often referred to as n-best hypotheses or n-best list. The confidence factor of the hypothesis or the confidence factors of each word in the hypothesis can be compared with a matching threshold. It should be understood that other speech recognition models are also contemplated within the scope of the present invention; for example, template matching dynamic time warping (DTW) and neural networks are two such exemplary, alternative modeling techniques. In some example embodiments incorporating such other speech recognition models, the features generated by the feature generator 406 may comprise phonemes. In such example embodiments, a phoneme sequence decoder may not be necessary.

As described herein, some embodiments of the present disclosure leverage expected responses to adapt word pronunciations in a speech recognition system to a user(s), which in turn improves speech recognition accuracy and efficiency. In certain environments utilizing speech recognition systems, the expected response to be received from a user is known beforehand or can be determined. For example, when picking a part from a bin, or placing an item in a warehouse location, there can be a check-digit that verifies the location of the user, or the operation being performed by the user. During the operation, the user may be prompted to go to a location and speak the check-digit (or check-phrase) displayed at and associated with the location. The speech recognition system attempts to recognize the user's spoken response and compare it with this check-digit or check-phrase to confirm that the user is at the correct location before prompting the user to perform an operation, such as picking a case of product. As used herein, "check-digit" refers to the sequence of one or more words that are associated with a location, bin or slot for the purpose of verifying a user's location. A "check-digit" may, for example, be a three-digit number, or non-digit words, or a combination of these. **In** addition to this exemplary environment, there are other scenarios in which a particular response or series of responses is expected from the user, such as password entry and entry of some quantities. For example, the expected response might be obtained by at least one of evaluating an expression or retrieving the expected response from a table or data structure prior to comparing the hypothesis to the expected response. For example, the speech recognition system 412 may be associated with a data repository that stores expected responses. Alternatively, the expected response might be dynamically determined prior to the comparison. Some example embodiments described herein involve situations wherein one (or more) known expected response(s) are utilized to improve speech recognition systems, for example, by adapting word pronunciations of speech recognition to a user or set of users. In addition to these exemplary environments, an expected response may be known in other situations when a speech recognition system is waiting for a response from the user. As recognized by one of ordinary skill, the principles of the present invention can be advantageous within these situations as well.

In some embodiments, the speech recognition system 102 compares the recognition hypothesis 424 for the input speech 402 to one or more expected responses to determine a match. In some embodiments, if the match is satisfactory, the input speech 402 is accepted. In some embodiments, if the match is not satisfactory, the input speech 402 may not be accepted. In some embodiments, even if the match is not satisfactory, the input speech 402 may be accepted. For example, where the confidence factor is determined to be sufficient (e.g., sufficiently high), the input speech may be accepted even if the match is not satisfactory. In some embodiments, comparing the recognition hypothesis 424 for the input speech 402 to the one or more expected responses 414 comprises processing the recognition hypothesis 424 using a matching algorithm. In some embodiments, a matching algorithm is configured to compare words (e.g., word tokens) to determine a match. In some embodiments, the matching algorithm may comprise any conventional algorithm that is configured to compare a sequence of words to a set of sequences of words to determine a match. In one example embodiment, the matching algorithm is configured to compare the word(s) in a sequence of words (e.g., recognition hypothesis) to the word(s) in a set of sequences of words (e.g., expected responses) based on the location of the word(s) in the corresponding sequences of words. For example, in some embodiments, the first word in a sequence of words is compared to the first word in each sequence of the set of sequences of words, the second word in the sequence of words is compared to the second word in each sequence of the set of sequence of words, the third word in the sequence of words is compared to the third word in each set of sequences of words. In one example embodiment, the matching algorithm is configured to generate an output that indicates whether the sequence of words matches at least one of the sequences in the set of sequences of words based on the comparison of each corresponding pair words. In some embodiments, comparing the recognition hypothesis 424 for the input speech 402 to an expected response 414 using a matching algorithm comprises generating a matching score for the pair of recognition hypothesis 424 and expected responses 414, and determining if the matching score satisfies a threshold. In some embodiments, a recognition hypothesis 424 may be determined to match the expected response if the matching score satisfies (e.g., exceeds) the threshold.

In some embodiments, a grammar, grammar specification, language model, and or similar terms used herein interchangeably is used to assist the word sequence decoder 408 in generating the recognition hypothesis 424 for an input speech 402. In some embodiments, the grammar is a finite-state grammar that restricts the sequence of words that can be recognized as valid by the speech recognition system 412. In some embodiments, the word sequence decoder 408 leverages pronunciation information to generate a recognition hypothesis. For example, a search algorithm utilized by the word sequence decoder 408 may be informed by pronunciation information to generate a recognition hypothesis. For example, in some embodiments, the word sequence decoder 408 (e.g., search algorithm thereof) may leverage one or more pronunciations (e.g., contained in a pronunciation dictionary, such as pronunciation dictionary 422) to generate a recognition hypothesis. In some embodiments, one or more models (e.g., contained in a model library, such as model library 410) may be informed by pronunciations associated with words in a grammar and/or words in a pronunciation dictionary 422.

In some embodiments, a pronunciation dictionary may comprise a plurality of pronunciation variants for each word associated with an expected response. As such, the pronunciation dictionary 422 may comprise recognition enabling information. In some embodiments, such recognition enabling information may be based at least in part on phonemes (or other sub-models). For example, the word sequence decoder 408 may be informed based at least in part on phonemes (e.g., phonemes associated with words being hypothesized). In some embodiments, the words in the pronunciation dictionary 422 may comprise all the words in a grammar. Additionally or alternatively, in some embodiments, a pronunciation dictionary may comprise a grapheme-to-phoneme (g2p)/text to phoneme (TTP) module/model. For example, the pronunciation dictionary may comprise a software, hardware, firmware, and/or a process that produces a pronunciation (e.g., phoneme sequence) when presented with a word.

In some embodiments, the pronunciation dictionary 422 is updated to adapt word pronunciations in a speech recognition system to a user(s) based at least in part by providing alternative pronunciation for one or more words associated with an expected response. In some embodiments, the speech recognition system 412 may determine alternate pronunciations based at least in part on a phoneme sequence (or other model) associated with an input speech. In some embodiments, the speech recognition system 412 leverages a phoneme sequence decoder 426 to generate a phoneme sequence 428 (e.g., sequence of one or more phonemes) for the input speech 402. The phoneme sequence 428 may comprise a phoneme sequence for each of one or more words, where the one or more words may correspond to the one or more words of the recognition hypothesis 424. In some embodiments, the speech recognition system 412 may leverage the word sequence decoder 408 to generate the phoneme sequence 428. For example, in some embodiments, the phoneme sequence decoder 426 may use the same implementation as word sequence decoder 408, but with a different configuration. Additionally or alternatively, in some embodiments, the phoneme sequence decoder 426 may embody a particular implementation of the word sequence decoder 408 as depicted and described herein. As noted above, in some embodiments where the features 420 generated by the feature generator 406 comprises phonemes, a phoneme sequence decoder 426 may not be necessary. In such embodiments, the word sequence decoder 408 generates the recognition hypothesis based on the features, wherein the features comprise phonemes associated with the input speech.

In some embodiments, to adapt word pronunciations in a speech recognition system to a user(s) based on an expected response, the speech recognition system 102 compares the recognition hypothesis 424 to one or more expected responses 414. In some embodiments, the speech recognition system 102 compares the recognition hypothesis 424 to the one or more expected responses 414 using a matching algorithm 416 (as described above). In some embodiments, in response to determining that the recognition hypothesis 424 matches an expected response or matches at least one expected response, the phoneme sequence 428 is stored in a data repository (not shown in the figure 4) and may be employed to adapt word pronunciations to a user(s).

In some embodiments, a phoneme sequence for a word of a qualifying recognition hypothesis (e.g., a recognition hypothesis that is determined to match an expected response) is employed to adapt word pronunciations to a user(s) if the phoneme sequence for the word satisfies updating criteria as described herein. For example, in some embodiments, the one or more updating criteria include one or more of whether an occurrence count for the phoneme sequence satisfies an occurrence count threshold, whether the phoneme sequence is one of top N (e.g., N = 2, 5, 10, 20, etc.) occurring phoneme sequences for the word, and/or whether an occurrence ratio for the phoneme sequence satisfies an occurrence ratio threshold. In some embodiments, to determine if the phoneme sequence 428 satisfies the updating criteria, the speech recognition system 412 tracks the occurrence of each phoneme sequence associated with a qualifying recognition hypothesis.

In some embodiments, adapting word pronunciations to a user(s) with respect to a given word includes updating a set of phoneme sequences associated with the word. For example, in some embodiments, in response to determining that a phoneme sequence of a word of a qualifying recognition hypothesis satisfies the updating criteria 440, the speech recognition system 412 updates the set of pronunciations for the word in the pronunciation dictionary 422. This improves the accuracy of the speech recognition system 102 for future utterances by the user(s).

Having described example systems and apparatuses, and data visualizations, in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

Although the example processes depict a particular sequence of operations, the sequence may be altered without departing from the scope of the present disclosure. For example, some of the operations depicted may be performed in parallel or in a different sequence that does not materially affect the function of the processes.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

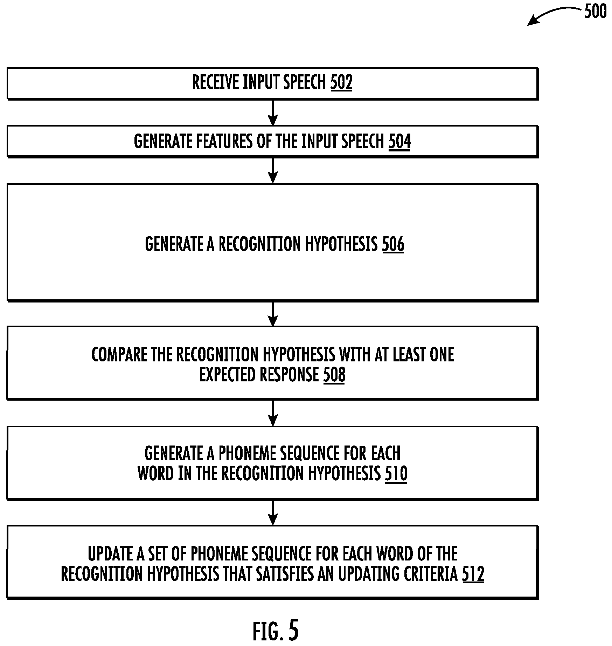

FIG. 5 illustrates a flow chart depicting example operations of an example process for adapting speech recognition pronunciation to a user(s), in accordance with at least one embodiment of the present disclosure. Specifically, FIG. 5 depicts an example process 500. In some embodiments, the process 500 is embodied by computer program code stored on a non-transitory computer-readable storage medium of a computer program product configured for execution to perform the process as depicted and described. Alternatively or additionally, in some embodiments, the process 500 is performed by one or more specially-configured computing devices, such as the apparatus 200 alone or in communication with one or more other component(s), device(s), system(s), and/or the like. In this regard, in some such embodiments, the apparatus 200 is specially-configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one external data repository, client system, and/or the like, to perform one or more of the operations as depicted and described. For purposes of simplifying the description, the process 500 is described as performed by and from the perspective of the apparatus 200.

Although the example process 500 depicts a particular sequence of operations, the sequence may be altered without departing from the scope of the present disclosure. For example, some of the operations depicted may be performed in parallel or in a different sequence that does not materially affect the function of the process 500. In other examples, different components of an example device or system that implements the process 500 may perform functions at substantially the same time or in a specific sequence.

According to some examples, the method includes receiving, at a speech recognition system, an input speech at block 502. In some embodiments, the apparatus 200 embodying the speech recognition system receives the input speech from a client system in response to an utterance by a user. For example, the input speech may be received through a microphone associated with the client system.

According to some examples, the method includes, generating features of the input speech at block 504. In some embodiments, the apparatus 200 is configured to generate features for the input speech, where the features may be represented as vectors (e.g., feature vectors). In some embodiments, the features comprise acoustic features for the input speech. In some embodiments, the apparatus 200 is configured to digitize the received input speech and separate the input speech into the features. In some embodiments, the features comprise phonemes. In some embodiments, the apparatus 200 generates the features using a feature generator, such as feature generator 406.

According to some examples, the method includes generating a recognition hypothesis at block 506. In some embodiments, the apparatus generates, based at least in part on the features of the input speech and using a search algorithm, a recognition hypothesis. In some embodiments, the search algorithm is informed by a pronunciation dictionary (e.g., sets of phoneme sequences). In some embodiments, the recognition hypothesis comprises a sequence of one or more words.

According to some examples, the method includes comparing the recognition hypothesis with at least one expected response at block 508. In some embodiments, the apparatus 200 compares the recognition hypothesis to the at least one expected response to determine if the recognition hypothesis matches the at least one expected response. In some embodiments, the apparatus 200 compares the recognition hypothesis to the at least one expected response using a matching algorithm. The matching algorithm, for example, may be configured to compare word tokens to determine if the word tokens match.

According to some examples, the method includes generating a phoneme sequence (e.g., pronunciation) for each word in the recognition hypothesis at block 510. In some embodiments, the apparatus 200 generates a phoneme sequence for each word in the recognition hypothesis based at least in part on features of the input speech. In some embodiments, the apparatus 200 may generate the phoneme sequence using a phoneme sequence decoder, such as phoneme sequence decoder 426 as described herein. In some embodiments, the apparatus may generate the phoneme sequence without employing a phoneme sequence decoder. For example, in some embodiments, the features of the input speech comprise phonemes, wherein a phoneme sequence decoder may not be necessary. In one example embodiment, the apparatus generates a phoneme sequence for each word in the recognition hypothesis in response to determining that the recognition hypothesis matches the at least one expected response.

According to some examples, the method includes updating a set of phoneme sequences at block 512. In some embodiments, the set of phoneme sequences is associated with a word of an expected response. In some embodiments, parts of the phoneme sequence are associated with a word of an expected response. In some embodiments, the apparatus 200 updates a set of phoneme sequences for each word of the recognition hypothesis that satisfies updating criteria based on the generated phoneme sequence for the respective word, where each word of the recognition hypothesis may correspond to a word of an expected response. For example, in some embodiments, the apparatus updates a set of phoneme sequences for at least one word of the recognition hypothesis, where the phoneme sequence for the at least one word of the recognition hypothesis satisfies the updating criteria, and where the at least one word corresponds to a word of an expected response.

In some embodiments, the apparatus 200 is configured to update a set of phoneme sequences in response to determining that the recognition hypothesis matches the at least one expected response (e.g., at block 508). For example, the apparatus 200 may be configured to, in response to determining that a recognition hypothesis matches the at least one expected response, update the set of phoneme sequences associated with at least one word of the recognition hypothesis, where the corresponding phoneme sequence for the at least one word satisfies an updating criteria.

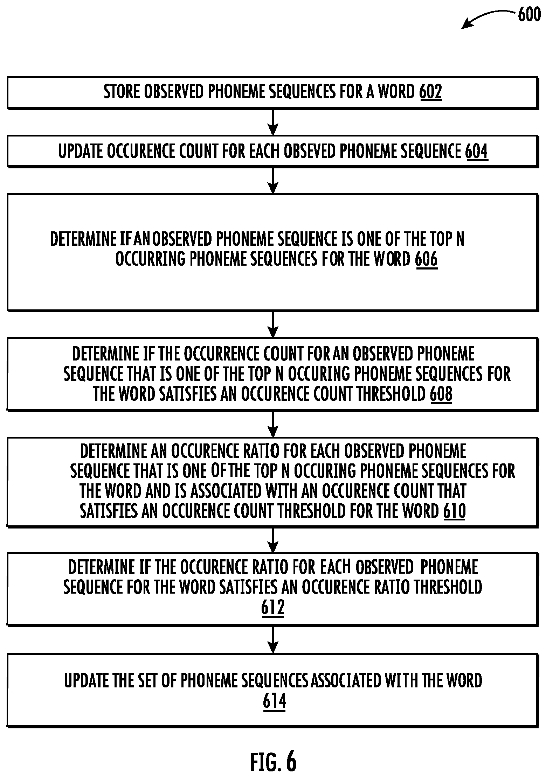

In some embodiments, the process of block 512 may be performed in accordance with the process 600 that is depicted in FIG. 6. FIG. 6 illustrates a flow chart depicting example operations of an example process for updating a set of phoneme sequences associated with a particular word of an expected response in accordance with at least one embodiment of the present disclosure. As such, pronunciations for the particular word are adapted to a user(s), which in turn improves accuracy and efficiency of a speech recognition system. Specifically, FIG. 6 depicts an example process 600. In some embodiments, the process 600 is embodied by computer program code stored on a non-transitory computer-readable storage medium of a computer program product configured for execution to perform the process as depicted and described. Alternatively or additionally, in some embodiments, the process 600 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with at least one external data repository, client system, and/or the like, to perform one or more of the operations as depicted and described. For purposes of simplifying the description, the process 600 is described as performed by and from the perspective of the apparatus 200.

Although the example process 600 depicts a particular sequence of operations, the sequence may be altered without departing from the scope of the present disclosure. For example, some of the operations depicted may be performed in parallel or in a different sequence that does not materially affect the function of the process 600. In other examples, different components of an example device or system that implements the process 600 may perform functions at substantially the same time or in a specific sequence.

As described above, FIG. 6 illustrates a flow chart depicting example operations of an example process for updating a set of phoneme sequences associated with a particular word of an expected response, in accordance with at least one embodiment of the present disclosure.

According to some examples, the method includes for each instance of a qualifying recognition hypothesis that includes the particular word, storing the phoneme sequence (e.g., observed phoneme sequence) for the word for the particular instance of qualifying recognition hypothesis at block 602. An observed phoneme sequence may describe a phoneme sequence that is generated, for example, at block 508. In some embodiments, as described above, a qualifying recognition hypothesis may describe a recognition hypothesis that is determined (e.g., by apparatus 200) to match an expected response. In some embodiments, the apparatus 200 stores each phoneme sequence observed for the word in a data repository. In some embodiments, the data repository may embody a data structure that includes a field for each word associated with an expected response. In some embodiments, each word field may be associated with one or more fields for storing observed phoneme sequences for the word. Additionally or alternatively, the data structure may include a field associated with each word for storing occurrence count for each unique phoneme sequence observed for the respective word.

According to some examples, the method includes updating the occurrence count for each observed phoneme sequence for the word at block 604. In some embodiments, an occurrence count for a phoneme sequence refers to a data entity that describes the number of times the phoneme sequence was observed. In some embodiments, the apparatus updates the occurrence count for each observed phoneme sequence in a data repository, such as the data repository described in relation with block 602. In some embodiments, updating the occurrence count for each observed phoneme sequence comprises updating the occurrence count field for each observed phoneme sequence (e.g., increasing the occurrence count for a phoneme sequence by one or more).

In some embodiments, the apparatus 200 aggregates the occurrence count for each observed phoneme sequence associated with a word. Additionally or alternatively, in some embodiments, the apparatus 200 determines whether the aggregate of the observed occurrence counts for each phoneme sequence associated with a word satisfies an aggregate threshold. Additionally or alternatively, in some embodiments, the apparatus 200, in response to an aggregate of the occurrence counts for phoneme sequences associated with a given word satisfying an aggregate threshold, reduces the occurrence count for each of the observed phoneme sequences of the word by a configurable percentage. In some embodiments, this ensures that the occurrence count criterion does not become less relevant as the total number of observations (e.g., total number of observed phoneme sequences) increases. In some embodiments, the updating criteria as described herein are configurable.

According to some examples, the method includes determining if an observed phoneme sequence is one of the top N occurring phoneme sequences for the word at block 606. In some embodiments, the apparatus evaluates the occurrence count for each observed phoneme sequence for the word to determine the observed phoneme sequence associated with an occurrence count that is within the top N occurring phoneme sequences for the word. In some embodiments, the apparatus 200 compares the occurrence count for a given observed phoneme sequence to the occurrence count for other observed phoneme sequences for the word to determine if the particular phoneme sequence is a top N occurring phoneme sequence for the word.

According to some examples, the method includes determining if the occurrence count for an observed phoneme sequence that is one of the top N occurring phoneme sequences for the word satisfies an occurrence count threshold (e.g., exceeds an occurrence count threshold) at block 608. In some embodiments, the apparatus 200 evaluates the occurrence count for each observed phoneme sequence that is a top N occurring phoneme sequence for the word to determine if the respective phoneme sequence is associated with an occurrence count that satisfies an occurrence count threshold.

According to some examples, the method includes determining an occurrence ratio for each observed phoneme sequence that is one of the top N occurring phoneme sequences for the word and is associated with an occurrence count that satisfies an occurrence count threshold for the word at block 610. In some embodiments, the apparatus 200 determines the occurrence ratio for a given observed phoneme sequence based on the occurrence count for the particular phoneme sequence and the occurrence count for the phoneme sequence for the word that is associated with the highest occurrence count. For example, in some embodiments, the apparatus 200 determines the ratio of the occurrence count of a particular observed phoneme sequence relative to the highest occurrence count for the plurality of phoneme sequences observed for the word.

According to some examples, the method includes determining if the occurrence ratio for the each observed phoneme sequence for the word satisfies an occurrence ratio threshold at block 612. In some embodiments, the apparatus 200 determines if the occurrence ratio for each observed phoneme sequence satisfies (e.g., exceeds) the occurrence ratio threshold. In some embodiments, the apparatus 200 determines if the occurrence ratio for each observed sequence that is one of top N occurring phoneme sequences for the word and is associated with an occurrence count that satisfies an occurrence count threshold for the word satisfies an occurrence ratio threshold.

According to some examples, the method includes updating the set of phoneme sequences associated with the word at block 614. For example, the apparatus 200 in some embodiments, updates the set of phoneme sequences in the pronunciation dictionary associated with the word. In some embodiments, the apparatus 200 updates the set of phoneme sequences associated with the word in response to at least one observed phoneme sequence satisfying the occurrence ratio. Additionally or alternatively, in some embodiments, the apparatus 200 updates the set of phoneme sequences associated with the word in response to the occurrence count for at least one observed phoneme sequence satisfying an occurrence count threshold. Additionally or alternatively still, in some embodiments, the apparatus 200 updates the set of phoneme sequences associated with the word in response to at least one observed phoneme sequence comprising one of the top N occurring phoneme sequences for the word.

In some embodiments, the apparatus 200 adds the phoneme sequence for each word in an input speech to training data for a model configured to generated phoneme sequence such as, for example, a Markov Chain model. In some embodiments, after enough sequences have been observed for a word, a sample of phoneme sequences is randomly generated for the word from the model and counted. In some embodiments, the most commonly-generated phoneme sequences from the sample are added to or used to modify the pronunciation of the word. In some embodiments, this process may combine and/or smooth the pronunciations from the phoneme sequence decoder.

In one example embodiment, for each word in a recognition hypothesis, the apparatus adds the phoneme sequence for the word to training data for a Markov Chain model and/or other model configured to generate phoneme sequences and generates using the Markov Chain model and/or other model, a plurality of sampled phoneme sequences for the word. In some embodiments, the apparatus 200, determines top M occurring sampled phoneme sequences of the plurality of sampled phoneme sequences, and adds the top M occurring sampled phoneme sequences to the pronunciation dictionary, whereby combining and/or smoothing the pronunciations from the phoneme sequence decoder. Additionally or alternatively, in some embodiments, the apparatus 200 determines if an occurrence count associated with a sampled phoneme sequence satisfies an occurrence count threshold, and/or if an occurrence ratio for the sampled phoneme sequence satisfies an occurrence ratio threshold.

To provide some context, one example environment in which an example embodiment of the present disclosure may be implemented is a voice-directed work dialog, with a central system or computer interfacing with a plurality of portable terminals carried or worn by workers, the voice interface may ask the worker to speak certain information, such as a numerical check digit. For example, in the picking application described earlier, the user may be directed to a shelf or bin and asked to pick a product and speak a two-digit numerical check digit to indicate that they are at the proper shelf or bin. The possible responses for a single numerical word spoken by the user in this example are "zero" to "nine" and thus with a two-digit check digit, there are 100 possible combinations. The user will then speak the two-digit check digit, for example "three five" (3, 5).

The system then extracts features based on the two-digit check digit utterance by the user and generates a recognition hypothesis. The system or terminal, pursuant to an aspect of the invention, knows that the expected response from the user for the desired check digits at that shelf or bin are the words "three five." The system then compares the recognition hypothesis to the expected response (e.g., "three five") to determine if the recognition hypothesis matches the expected response. In one embodiment, only a single expected response is used. Alternatively, there may be several possible expected responses that form a subset within a larger set of possible responses. For example, a set or subset of responses might be stored in memory for use in such fashion.

In some embodiments, to improve the accuracy and efficiency of a speech recognition system, speech recognition pronunciations are adapted for a user(s) based on expected response(s). To do this, in some embodiments, the speech recognition system updates a pronunciation dictionary that informs the search algorithm used in generating a recognition hypothesis, where the update is based on the occurrence rate of phoneme sequences associated with words in recognition hypotheses that match the expected response.

### Conclusion

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In addition, the processes depicted in the accompanying figures do not necessarily require the particular order shown, or sequential order, to achieve desirable results. In certain implementations, multitasking and parallel processing may be advantageous.

## Claims

1. A computer-implemented method for adapting speech recognition pronunciations to one or more users, the method comprising:
receiving (502) input speech;
generating (506), based on the input speech and using a search algorithm, a recognition hypothesis, wherein (i) the search algorithm is informed by a pronunciation dictionary based on phonemes associated with the input speech, (ii) the pronunciation dictionary comprises a set of phoneme sequences, and (iii) the recognition hypothesis comprises a sequence of one or more words;
comparing (508) the recognition hypothesis with at least one expected response to determine if the recognition hypothesis matches the at least one expected response, wherein the at least one expected response comprises a sequence of one or more words that are determined based at least on an operation being performed by a user, wherein the user has provided the input speech; and
in response to determining that the recognition hypothesis matches the at least one expected response:
generating (510) a phoneme sequence for each word in the recognition hypothesis based on the input speech; and
updating (512) the set of phoneme sequences in the pronunciation dictionary associated with at least one word of the recognition hypothesis, wherein updating the set of phoneme sequences comprises:
determining an occurrence ratio for the phoneme sequence, wherein the occurrence ratio is determined as a ratio of an occurrence count associated with the phoneme sequence to an occurrence count of the most occurring phoneme sequence for the word; and
updating (512) the set of phoneme sequences when the occurrence ratio for the phoneme sequence satisfies an occurrence ratio threshold.

2. The computer-implemented method of claim 1, wherein updating (512) the set of phoneme sequences in the pronunciation dictionary associated with the at least one word comprises adding the phoneme sequence for the at least one word to the set of phoneme sequences.

3. The computer-implemented method of claim 1, further comprising storing the phoneme sequence for each word in the recognition hypothesis in a data repository.

4. The computer-implemented method of claim 1, further comprising for each word in the recognition hypothesis, updating the occurrence count for the phoneme sequence.

5. The computer-implemented method of claim 4, wherein the set of phoneme sequences in the pronunciation dictionary associated with the at least one word is updated in response to determining that the phoneme sequence for the at least one word satisfies updating criteria.

6. The computer-implemented method of claim 5, wherein the phoneme sequence for the at least one word satisfies the updating criteria if the phoneme sequence is one of top N occurring phoneme sequences for the word.

7. The computer-implemented method of claim 1, further comprising for each word in the recognition hypothesis:
adding the phoneme sequence for the word to training data for a model configured to generate phoneme sequences; and
generating, using the model, a plurality of sampled phoneme sequences for the word.

8. The computer-implemented method of claim 7, further comprising for each word in the recognition hypothesis:
determining top M occurring sampled phoneme sequences of the plurality of sampled phoneme sequences; and
adding the top M occurring sampled phoneme sequences to the pronunciation dictionary.

9. An apparatus (200) for adapting speech recognition pronunciations to one or more users, the apparatus (200) comprising at least one processor (202) and at least one non-transitory memory (204) comprising program code stored thereon, wherein the at least one non-transitory memory (204) and the program code are configured to, with the at least one processor (202), cause the apparatus (200) to:
receive input speech;
generate, based on the input speech and using a search algorithm, a recognition hypothesis, wherein (i) the search algorithm is informed by a pronunciation dictionary based on phonemes associated with the input speech, (ii) the pronunciation dictionary comprises a set of phoneme sequences, and the recognition hypothesis comprises a sequence of one or more words;
compare the recognition hypothesis with at least one expected response to determine if the recognition hypothesis matches the at least one expected response, wherein the at least one expected response comprises a sequence of one or more words;
in response to determining that the recognition hypothesis matches the at least one expected response:
generate a phoneme sequence for each word in the recognition hypothesis based on the input speech;
determine an occurrence ratio for the phoneme sequence, wherein the occurrence ratio is determined as a ratio of an occurrence count associated with the phoneme sequence to an occurrence count of the most occurring phoneme sequence for the word; and
update the set of phoneme sequences in the pronunciation dictionary for at least one word of the recognition hypothesis when the occurrence ratio for the phoneme sequence satisfies an occurrence ratio threshold.

10. The apparatus (200) of claim 9, wherein updating the set of phoneme sequences for the at least one word comprises adding the phoneme sequence for the at least one word to the set of phoneme sequences in the pronunciation dictionary associated with the at least one word.

11. The apparatus (200) of claim 9, further comprising storing the phoneme sequence for each word in the recognition hypothesis in a data repository.

12. The apparatus (200) of claim 9, further comprising for each word in the recognition hypothesis, updating the occurrence count for the phoneme sequence.

13. A computer program product for adapting speech recognition pronunciations to one or more users, the computer program product comprising at least one non-transitory computer-readable storage medium having computer-readable program code portions stored therein, the computer-readable program code portions comprising an executable portion configured to:
receive input speech;
generate, based on the input speech and using a search algorithm, a recognition hypothesis, wherein (i) the search algorithm is informed by a pronunciation dictionary based on phonemes associated with the input speech, (ii) the pronunciation dictionary comprises a set of phoneme sequences, and (iii) the recognition hypothesis comprises a sequence of one or more words;
compare the recognition hypothesis with at least one expected response to determine if the recognition hypothesis matches the at least one expected response, wherein the at least one expected response comprises a sequence of one or more words; and
in response to determining that the recognition hypothesis matches the at least one expected response:
generate a phoneme sequence for each word in the recognition hypothesis;
determine an occurrence ratio for the phoneme sequence, wherein the occurrence ratio is determined as a ratio of an occurrence count associated with the phoneme sequence to an occurrence count of the most occurring phoneme sequence for the word; and
update a set of phoneme sequences in the pronunciation dictionary for at least one word of the recognition hypothesis when the occurrence ratio for the phoneme sequence satisfies an occurrence ratio threshold.

## Patentansprüche

1. Computerimplementiertes Verfahren zum Anpassen von Spracherkennungsaussprachen an einen oder mehrere Benutzer, das Verfahren umfassend:
Empfangen (502) einer Eingangssprache;
Erzeugen (506), basierend auf der Eingangssprache und unter Verwendung eines Suchalgorithmus, einer Erkennungshypothese, wobei (i) der Suchalgorithmus durch ein Aussprachewörterbuch basierend auf Phonemen, die der Eingangssprache zugehörig sind, informiert wird, (ii) das Aussprachewörterbuch einen Satz von Phonemsequenzen umfasst, und (iii) die Erkennungshypothese eine Sequenz von einem oder mehreren Wörtern umfasst;
Vergleichen (508) der Erkennungshypothese mit mindestens einer erwarteten Antwort, um zu bestimmen, ob die Erkennungshypothese mit der mindestens einen erwarteten Antwort übereinstimmt, wobei die mindestens eine erwartete Antwort eine Sequenz von einem oder mehreren Wörtern umfasst, die basierend auf mindestens einem von einem Benutzer durchgeführten Vorgang bestimmt werden, wobei der Benutzer die Eingangssprache bereitgestellt hat; und
als Antwort auf das Bestimmen, dass die Erkennungshypothese mit der mindestens einen erwarteten Antwort übereinstimmt:
Erzeugen (510) einer Phonemsequenz für jedes Wort in der Erkennungshypothese basierend auf der Eingangssprache; und
Aktualisieren (512) des Satzes von Phonemsequenzen in dem Aussprachewörterbuch, das dem mindestens einen Wort der Erkennungshypothese zugehörig ist, wobei das Aktualisieren des Satzes von Phonemsequenzen Folgendes umfasst:
Bestimmen eines Vorkommensverhältnisses für die Phonemsequenz, wobei das Vorkommensverhältnis als ein Verhältnis einer Vorkommenszahl, die der Phonemsequenz zugehörig ist, zu einer Vorkommenszahl der am meisten vorkommenden Phonemsequenz für das Wort bestimmt wird; und
Aktualisieren (512) des Satzes von Phonemsequenzen, wenn das Vorkommensverhältnis für die Phonemsequenz einen Vorkommensverhältnis-Schwellenwert erfüllt.

2. Computerimplementiertes Verfahren nach Anspruch 1, wobei das Aktualisieren (512) des Satzes von Phonemsequenzen in dem Aussprachewörterbuch, das dem mindestens einen Wort zugehörig ist, das Hinzufügen der Phonemsequenz für das mindestens eine Wort zu dem Satz von Phonemsequenzen umfasst.

3. Computerimplementiertes Verfahren nach Anspruch 1, ferner umfassend Speichern der Phonemsequenz für jedes Wort in der Erkennungshypothese in einem Datenrepositorium.

4. Computerimplementiertes Verfahren nach Anspruch 1, ferner umfassend für jedes Wort in der Erkennungshypothese, Aktualisieren der Vorkommenszahl für die Phonemsequenz.

5. Computerimplementiertes Verfahren nach Anspruch 4, wobei der Satz von Phonemsequenzen in dem Aussprachewörterbuch, das dem mindestens einen Wort zugehörig ist, als Antwort auf das Bestimmen aktualisiert wird, dass die Phonemsequenz für das mindestens eine Wort Aktualisierungskriterien erfüllt.

6. Computerimplementiertes Verfahren nach Anspruch 5, wobei die Phonemsequenz für das mindestens eine Wort die Aktualisierungskriterien erfüllt, wenn die Phonemsequenz eine von ersten N vorkommenden Phonemsequenzen für das Wort ist.

7. Computerimplementiertes Verfahren nach Anspruch 1, ferner umfassend für jedes Wort in der Erkennungshypothese:
Hinzufügen der Phonemsequenz für das Wort zu Trainingsdaten für ein Modell, das dazu konfiguriert ist, Phonemsequenzen zu erzeugen; und
Erzeugen, unter Verwendung des Modells, einer Vielzahl von abgetasteten Phonemsequenzen für das Wort.

8. Computerimplementiertes Verfahren nach Anspruch 7, ferner umfassend für jedes Wort in der Erkennungshypothese:
Bestimmen von ersten M vorkommenden abgetasteten Phonemsequenzen aus der Vielzahl von abgetasteten Phonemsequenzen; und
Hinzufügen der ersten M vorkommenden abgetasteten Phonemsequenzen zu dem Aussprachewörterbuch.

9. Einrichtung (200) zum Anpassen von Spracherkennungsaussprachen an einen oder mehrere Benutzer, die Einrichtung (200) umfassend mindestens einen Prozessor (202) und mindestens einen nichtflüchtigen Speicher (204), der darauf gespeicherten Programmcode umfasst, wobei der mindestens eine nichtflüchtige Speicher (204) und der Programmcode dazu konfiguriert sind, mit dem mindestens einen Prozessor (202) die Einrichtung (200) zu veranlassen:
eine Eingangssprache zu empfangen;
basierend auf der Eingangssprache und unter Verwendung eines Suchalgorithmus, eine Erkennungshypothese zu erzeugen, wobei (i) der Suchalgorithmus durch ein Aussprachewörterbuch basierend auf Phonemen, die der Eingangssprache zugehörig sind, informiert wird, (ii) das Aussprachewörterbuch einen Satz von Phonemsequenzen umfasst, und die Erkennungshypothese eine Sequenz von einem oder mehreren Wörtern umfasst;
die Erkennungshypothese mit mindestens einer erwarteten Antwort zu vergleichen, um zu bestimmen, ob die Erkennungshypothese mit der mindestens einen erwarteten Antwort übereinstimmt, wobei die mindestens eine erwartete Antwort eine Sequenz von einem oder mehreren Wörtern umfasst;
als Antwort auf das Bestimmen, dass die Erkennungshypothese mit der mindestens einen erwarteten Antwort übereinstimmt:
eine Phonemsequenz für jedes Wort in der Erkennungshypothese basierend auf der Eingangssprache zu erzeugen;
ein Vorkommensverhältnis für die Phonemsequenz zu bestimmen, wobei das Vorkommensverhältnis als ein Verhältnis einer Vorkommenszahl, die der Phonemsequenz zugehörig ist, zu einer Vorkommenszahl der am meisten vorkommenden Phonemsequenz für das Wort bestimmt wird; und
den Satz von Phonemsequenzen in dem Aussprachewörterbuch für mindestens ein Wort der Erkennungshypothese zu aktualisieren, wenn das Vorkommensverhältnis für die Phonemsequenz einen Vorkommensverhältnis-Schwellenwert erfüllt.

10. Einrichtung (200) nach Anspruch 9, wobei das Aktualisieren des Satzes von Phonemsequenzen für das mindestens eine Wort das Hinzufügen der Phonemsequenz für das mindestens eine Wort zu dem Satz von Phonemsequenzen in dem Aussprachewörterbuch, das dem mindestens einen Wort zugehörig ist, umfasst.

11. Einrichtung (200) nach Anspruch 9, ferner umfassend Speichern der Phonemsequenz für jedes Wort in der Erkennungshypothese in einem Datenrepositorium.

12. Einrichtung (200) nach Anspruch 9, ferner umfassend für jedes Wort in der Erkennungshypothese, Aktualisieren der Vorkommenszahl für die Phonemsequenz.

13. Computerprogrammprodukt zum Anpassen von Spracherkennungsaussprachen an einen oder mehrere Benutzer, das Computerprogrammprodukt umfassend mindestens ein nichtflüchtiges computerlesbares Speichermedium, das darauf gespeicherte computerlesbare Programmcodeabschnitte aufweist, wobei die computerlesbaren Programmcodeabschnitte einen ausführbaren Abschnitt umfassen, der dazu konfiguriert ist:
eine Eingangssprache zu empfangen;
basierend auf der Eingangssprache und unter Verwendung eines Suchalgorithmus, eine Erkennungshypothese zu erzeugen, wobei (i) der Suchalgorithmus durch ein Aussprachewörterbuch basierend auf Phonemen, die der Eingangssprache zugehörig sind, informiert wird, (ii) das Aussprachewörterbuch einen Satz von Phonemsequenzen umfasst, und (iii) die Erkennungshypothese eine Sequenz von einem oder mehreren Wörtern umfasst;
die Erkennungshypothese mit mindestens einer erwarteten Antwort zu vergleichen, um zu bestimmen, ob die Erkennungshypothese mit der mindestens einen erwarteten Antwort übereinstimmt, wobei die mindestens eine erwartete Antwort eine Sequenz von einem oder mehreren Wörtern umfasst; und
als Antwort auf das Bestimmen, dass die Erkennungshypothese mit der mindestens einen erwarteten Antwort übereinstimmt:
eine Phonemsequenz für jedes Wort in der Erkennungshypothese zu erzeugen;
ein Vorkommensverhältnis für die Phonemsequenz zu bestimmen, wobei das Vorkommensverhältnis als ein Verhältnis einer Vorkommenszahl, die der Phonemsequenz zugehörig ist, zu einer Vorkommenszahl der am meisten vorkommenden Phonemsequenz für das Wort bestimmt wird; und
einen Satz von Phonemsequenzen in dem Aussprachewörterbuch für mindestens ein Wort der Erkennungshypothese zu aktualisieren, wenn das Vorkommensverhältnis für die Phonemsequenz einen Vorkommensverhältnis-Schwellenwert erfüllt.

## Revendications

1. Procédé mis en œuvre par ordinateur pour adapter des prononciations de reconnaissance vocale à un ou plusieurs utilisateurs, le procédé comprenant :
la réception (502) d'une entrée vocale ;
la génération (506), sur la base de l'entrée vocale et en utilisant un algorithme de recherche, d'une hypothèse de reconnaissance, dans lequel (i) l'algorithme de recherche est informé par un dictionnaire de prononciation sur la base de phonèmes associés à l'entrée vocale, (ii) le dictionnaire de prononciation comprend un ensemble de séquences de phonèmes, et (iii) l'hypothèse de reconnaissance comprend une séquence d'un ou plusieurs mots ;
la comparaison (508) de l'hypothèse de reconnaissance avec au moins une réponse attendue pour déterminer si l'hypothèse de reconnaissance correspond à l'au moins une réponse attendue, dans lequel l'au moins une réponse attendue comprend une séquence d'un ou plusieurs mots qui sont déterminés sur la base d'au moins une opération étant réalisée par un utilisateur, dans lequel l'utilisateur a fourni l'entrée vocale ; et
en réponse à la détermination que l'hypothèse de reconnaissance correspond à l'au moins une réponse attendue :
la génération (510) d'une séquence de phonèmes pour chaque mot dans l'hypothèse de reconnaissance sur la base de l'entrée vocale ; et
la mise à jour (512) de l'ensemble de séquences de phonèmes dans le dictionnaire de prononciation associé à au moins un mot de l'hypothèse de reconnaissance, dans lequel la mise à jour de l'ensemble de séquences de phonèmes comprend :
la détermination d'un rapport d'occurrences pour la séquence de phonèmes, dans lequel le rapport d'occurrences est déterminé en tant que rapport d'un nombre d'occurrences associé à la séquence de phonèmes sur un nombre d'occurrences de la séquence de phonèmes la plus fréquente pour le mot ; et
la mise à jour (512) de l'ensemble de séquences de phonèmes lorsque le rapport d'occurrences pour la séquence de phonèmes satisfait un seuil de rapport d'occurrences.

2. Procédé mis en œuvre par ordinateur selon la revendication 1, dans lequel la mise à jour (512) de l'ensemble de séquences de phonèmes dans le dictionnaire de prononciation associé à l'au moins un mot comprend l'ajout de la séquence de phonèmes pour l'au moins un mot à l'ensemble de séquences de phonèmes.

3. Procédé mis en œuvre par ordinateur selon la revendication 1, comprenant en outre le stockage de la séquence de phonèmes pour chaque mot dans l'hypothèse de reconnaissance dans un référentiel de données.

4. Procédé mis en œuvre par ordinateur selon la revendication 1, comprenant en outre pour chaque mot dans l'hypothèse de reconnaissance, la mise à jour du nombre d'occurrences pour la séquence de phonèmes.

5. Procédé mis en œuvre par ordinateur selon la revendication 4, dans lequel l'ensemble de séquences de phonèmes dans le dictionnaire de prononciation associé à l'au moins un mot est mis à jour en réponse à la détermination que la séquence de phonèmes pour l'au moins un mot satisfait des critères de mise à jour.

6. Procédé mis en œuvre par ordinateur selon la revendication 5, dans lequel la séquence de phonèmes pour l'au moins un mot satisfait les critères de mise à jour si la séquence de phonèmes est une des N séquences de phonèmes les plus fréquentes pour le mot.

7. Procédé mis en œuvre par ordinateur selon la revendication 1, comprenant en outre pour chaque mot dans l'hypothèse de reconnaissance :
l'ajout de la séquence de phonèmes pour le mot aux données d'entraînement pour un modèle configuré pour générer des séquences de phonèmes ; et
la génération, en utilisant le modèle, d'une pluralité de séquences de phonèmes échantillonnées pour le mot.

8. Procédé mis en œuvre par ordinateur selon la revendication 7, comprenant en outre pour chaque mot dans l'hypothèse de reconnaissance :
la détermination de M séquences de phonèmes échantillonnées les plus fréquentes de la pluralité de séquences de phonèmes échantillonnées ; et
l'ajout des M séquences de phonèmes échantillonnées les plus fréquentes au dictionnaire de prononciation.

9. Appareil (200) pour adapter des prononciations de reconnaissance vocale à un ou plusieurs utilisateurs, l'appareil (200) comprenant au moins un processeur (202) et au moins une mémoire non transitoire (204) comprenant un code de programme stocké dans celle-ci, dans lequel l'au moins une mémoire non transitoire (204) et le code de programme sont configurés, avec l'au moins un processeur (202), pour amener l'appareil (200) à :
recevoir une entrée vocale ;
générer, sur la base de l'entrée vocale et en utilisant un algorithme de recherche, une hypothèse de reconnaissance, dans lequel (i) l'algorithme de recherche est informé par un dictionnaire de prononciation sur la base de phonèmes associés à l'entrée vocale, (ii) le dictionnaire de prononciation comprend un ensemble de séquences de phonèmes, et l'hypothèse de reconnaissance comprend une séquence d'un ou plusieurs mots ;
comparer l'hypothèse de reconnaissance avec au moins une réponse attendue pour déterminer si l'hypothèse de reconnaissance correspond à l'au moins une réponse attendue, dans lequel l'au moins une réponse attendue comprend une séquence d'un ou plusieurs mots ;
en réponse à la détermination que l'hypothèse de reconnaissance correspond à l'au moins une réponse attendue :
générer une séquence de phonèmes pour chaque mot dans l'hypothèse de reconnaissance sur la base de l'entrée vocale ;
déterminer un rapport d'occurrences pour la séquence de phonèmes, dans lequel le rapport d'occurrences est déterminé en tant que rapport d'un nombre d'occurrences associé à la séquence de phonèmes sur un nombre d'occurrences de la séquence de phonèmes la plus fréquente pour le mot ; et
mettre à jour l'ensemble de séquences de phonèmes dans le dictionnaire de prononciation pour au moins un mot de l'hypothèse de reconnaissance lorsque le rapport d'occurrences pour la séquence de phonèmes satisfait un seuil de rapport d'occurrences.

10. Appareil (200) selon la revendication 9, dans lequel la mise à jour de l'ensemble de séquences de phonèmes pour l'au moins un mot comprend l'ajout de la séquence de phonèmes pour l'au moins un mot à l'ensemble de séquences de phonèmes dans le dictionnaire de prononciation associé à l'au moins un mot.

11. Appareil (200) selon la revendication 9, comprenant en outre le stockage de la séquence de phonèmes pour chaque mot dans l'hypothèse de reconnaissance dans un référentiel de données.

12. Appareil (200) selon la revendication 9, comprenant en outre pour chaque mot dans l'hypothèse de reconnaissance, la mise à jour du nombre d'occurrences pour la séquence de phonèmes.

13. Produit de programme d'ordinateur pour adapter des prononciations de reconnaissance vocale à un ou plusieurs utilisateurs, le produit de programme d'ordinateur comprenant au moins un support de stockage non transitoire lisible par ordinateur ayant des parties de code de programme lisible par ordinateur stockées dans celui-ci, les parties de code de programme lisible par ordinateur comprenant une partie exécutable configurée pour :
recevoir une entrée vocale ;
générer, sur la base de l'entrée vocale et en utilisant un algorithme de recherche, une hypothèse de reconnaissance, dans lequel (i) l'algorithme de recherche est informé par un dictionnaire de prononciation sur la base de phonèmes associés à l'entrée vocale, (ii) le dictionnaire de prononciation comprend un ensemble de séquences de phonèmes, et (iii) l'hypothèse de reconnaissance comprend une séquence d'un ou plusieurs mots ;
comparer l'hypothèse de reconnaissance avec au moins une réponse attendue pour déterminer si l'hypothèse de reconnaissance correspond à l'au moins une réponse attendue, dans lequel l'au moins une réponse attendue comprend une séquence d'un ou plusieurs mots ; et
en réponse à la détermination que l'hypothèse de reconnaissance correspond à l'au moins une réponse attendue :
générer une séquence de phonèmes pour chaque mot dans l'hypothèse de reconnaissance ;
déterminer un rapport d'occurrences pour la séquence de phonèmes, dans lequel le rapport d'occurrences est déterminé en tant que rapport d'un nombre d'occurrences associé à la séquence de phonèmes sur un nombre d'occurrences de la séquence de phonèmes la plus fréquente pour le mot ; et
mettre à jour un ensemble de séquences de phonèmes dans le dictionnaire de prononciation pour au moins un mot de l'hypothèse de reconnaissance lorsque le rapport d'occurrences pour la séquence de phonèmes satisfait un seuil de rapport d'occurrences.
